(19) Europäisches Patentamt
European Patent Office
Office européen des brevets

(11) EP 1 243 046 B1

(12) **EUROPÄISCHE PATENTSCHRIFT**

(45) Veröffentlichungstag und Bekanntmachung des Hinweises auf die Patenterteilung:
**06.08.2003 Patentblatt 2003/32**

(21) Anmeldenummer: **00969403.5**

(22) Anmeldetag: **04.10.2000**

(51) Int Cl.⁷: **H01M 8/04**

(86) Internationale Anmeldenummer:
**PCT/EP00/09692**

(87) Internationale Veröffentlichungsnummer:
**WO 01/033654 (10.05.2001 Gazette 2001/19)**

(54) **OPTIMIERUNG DER BETRIEBSPARAMETER EINES DIREKT-METHANOL-BRENNSTOFFZELLENSYSTEMS**

OPTIMISATION OF THE OPERATING PARAMETERS OF A DIRECT METHANOL FUEL CELL SYSTEM

OPTIMISATION DES PARAMETRES DE FONCTIONNEMENT D'UN SYSTEME DE PILE A COMBUSTIBLE DIRECTE A METHANOL

(84) Benannte Vertragsstaaten:
**AT BE CH CY DE DK ES FI FR GB GR IE IT LI LU MC NL PT SE**

(30) Priorität: **30.10.1999 DE 19952384**

(43) Veröffentlichungstag der Anmeldung:
**25.09.2002 Patentblatt 2002/39**

(73) Patentinhaber: **Forschungszentrum Jülich GmbH
52425 Jülich (DE)**

(72) Erfinder: **VON ANDRIAN, Stefanie
70735 Fellbach (DE)**

(74) Vertreter: **Gille Hrabal Struck Neidlein Prop Roos
Patentanwälte,
Brucknerstrasse 20
40593 Düsseldorf (DE)**

(56) Entgegenhaltungen:
**DE-A- 4 201 795 DE-A- 19 629 265**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft einen Brennstoffzellenstapel, bei dem mehrere Brennstoffzellen mechanisch und elektrisch miteinander verbunden sind.

Aus der Druckschrift DE 44 30 958 C1 sowie aus der Druckschrift DE 195 31 852 C1 sind Brennstoffzellen bekannt, die eine Kathode, einen Elektrolyten sowie eine Anode aufweisen. In einen an die Kathode angrenzenden Kanal oder Raum wird ein Oxidationsmittel (z. B. Luft) und in einen an die Anode angrenzenden Kanal oder Raum wird Brennstoff (z. B. Wasserstoff) zugeführt.

Die Betriebsmittel gelangen zu den Elektroden und reichern sich hier ab. Anschließend treten die abgereicherten Betriebsmittel wieder aus und werden aus der Brennstoffzelle herausgeleitet.

An der Anode der aus der Druckschrift DE 195 31 852 C1 bekannten Brennstoffzelle bilden sich in Anwesenheit des Brennstoffs mittels eines Katalysators Protonen. Die Protonen passieren die Membran (Elektrolyten) und verbinden sich auf der Kathodenseite mit dem vom Oxidationsmittel stammenden Sauerstoff zu Wasser. An der Anode werden die Elektronen freigesetzt und an der Kathode verbraucht und so elektrische Energie erzeugt.

Die Leistungsfähigkeit einer Brennstoffzelle hängt u. a. von den Betriebsbedingungen ab. Hierzu gehören insbesondere der auf der Anoden- und Kathodenseite herrschende Druck, die Temperatur sowie die eingesetzten Betriebsmittel.

Um zu guten Leistungen einer Niedertemperatur-Brennstoffzelle zu gelangen, die mit flüssigem Brennstoff wie Methanol betrieben wird, ist es bekannt, den Druck auf der Anoden-, Kathodenseite sowie die Temperatur so einzustellen, daß die durch die Brennstoffzelle erzeugte elektrische Leistung maximal ist.

Der vorgenannte Ansatz läßt allerdings unberücksichtigt, daß die Maximierung der erzeugten elektrischen Leistung keineswegs einen optimalen Wirkungsgrad zur Folge hat. Es ist nämlich zu berücksichtigen, welche Leistungen erbracht werden müssen, um die Brennstoffzelle zu betreiben. So muß zur Erzeugung eines Überdruckes auf der Kathoden- oder Anodenseite eine Pumpleistung erbracht werden. Eine solche aufzuwendende Leistung ist unter anderem von der erzeugten elektrischen Leistung abzuziehen, um die von der Brennstoffzelle erzeugte Nettoleistung zu ermitteln.

Aufgabe der Erfindung ist die Schaffung eines Verfahrens zur Einstellung von Betriebsbedingungen bei einer Niedertemperatur-Brennstoffzelle, so daß ein leistungsfähiger Betrieb einer Brennstoffzelle möglich ist.

Die Aufgabe der Erfindung wird durch ein Verfahren mit den Merkmalen des ersten Anspruches gelöst. Vorteilhafte Ausgestaltungen ergeben sich aus den Unteransprüchen.

Verfahrensgemäß werden der Druck auf der Kathodenseite sowie die Betriebstemperatur der Brennstoffzelle bzw. eines Brennstoffzellenstapels so eingestellt, daß die Brennstoffzelle Abwärme erzeugt und zugleich ein Systemwirkungsgrad erzielt wird, der im wesentlichen dem maximal in der Praxis erreichbaren entspricht.

Unter Druck auf der Kathodenseite wird der Druck verstanden, der im Kathodenraum einer Brennstoffzelle herrscht. Der Kathodenraum ist der Raum, in dem sich eine Kathode befindet.

Unter Betriebstemperatur ist die mittlere Temperatur in einer Brennstoffzelle bzw. im Brennstoff zellenstapel zu verstehen, die während des Betriebes herrscht.

Unter Systemwirkungsgrad $\eta$ wird die Nettoleistung dividiert durch den Stofffluß an Brennstoff (Molmenge pro Zeiteinheit) sowie dividiert durch den unteren Heizwert des eingesetzten Brennstoffes verstanden. Der untere Heizwert $H_u$ ist die Energie, die freigesetzt wird, wenn der Brennstoff in der Brennstoffzelle vollständig in dampfförmiges Wasser umgesetzt wird.

Unter Nettoleistung $P_{netto}$ wird die erzeugte elektrische Leistung der Brennstoffzelle abzüglich der Leistung, die für den Betrieb der Brennstoffzelle aufgewendet werden muß, verstanden.

Unter Abwärme wird die von der Brennstoffzelle erzeugte Energie abzüglich der von der Brennstoffzelle erzeugten elektrischen Energie abzüglich der Wärmeenergie, die von der Brennstoffzelle aufgewendet wird, um die Betriebstemperatur zu halten bzw. zu erreichen sowie abzüglich der aufgewendeten Verdampfungsenthalpie für das auf der Kathodenseite anfallende Wasser verstanden. Die Abwärme ist im Ergebnis die Wärmemenge, die von der Brennstoffzelle an die Umgebung abgegeben wird.

Das Verfahren betrifft eine Brennstoffzelle, die mit flüssigem Brennstoff betrieben wird.

Verfahrensgemäß sind die Parameter Druck auf der Kathodenseite sowie Betriebstemperatur insbesondere so einzustellen, daß

1. Abwärme erzeugt wird und diese den halben Wert der durch die Brennstoffzelle erzeugten elektrischen Leistung nicht übersteigt. Beträgt die durch die Brennstoffzelle erzeugte elektrische Leistung beispielsweise 80 KW, so liegt die Abwärme zwischen 0 und 40 KW.

2. Druck und Temperatur so gewählt sind, daß der in der Praxis erzielbare maximale Systemwirkungsgrad $\eta_{System}$ zu wenigstens 90 % erreicht wird.

Abwärme sinkt mit steigender Spannung, während die Leistung ansteigt. Zweckmäßig wird daher eine Zellspannung vorgegeben. Diese beträgt regelmäßig um die 500 mV. Die übrigen Einstellungen werden dann bezogen auf die konstante Zellspannung ermittelt.

Das erfindungsgemäße Verfahren weist gegenüber dem Stand der Technik den wesentlichen Vorteil auf, daß bei der Optimierung von Druck und Temperatur insbesondere auch die Abwärme berücksichtigt wird. Wird durch die Brennstoffzelle keine Abwärme erzeugt, so muß der Brennstoffzelle für den Betrieb externe Wärme zugeführt werden. Ein energetisch sinnvoller Betrieb ist unter diesen Bedingungen nicht möglich. Erfindungsgemäß wird folglich ein energetisch sinnvoller Betrieb sichergestellt.

Ferner wird durch die Erfindung der Systemwirkungsgrad berücksichtigt. Auch auf diese Weise wird sichergestellt, daß die Betriebstemperatur und der Kathodendruck in verbesserter Weise gegenüber dem eingangs genannten Stand der Technik eingestellt werden.

Es hat sich ferner gezeigt, daß neben der Betriebstemperatur der Druck auf der Kathodenseite zur Erzielung optimaler Leistungen besonders wichtig ist. Verfahrensgemäß werden also die für den Betrieb einer Brennstoffzelle wesentlichen Parameter berücksichtigt. Auch aus diesem Grund ist das Verfahren besonders gut geeignet, um einen leistungsfähigen Betrieb einer Brennstoffzelle zu ermöglichen.

Die Grundlagen zur Erfindung werden nachfolgend näher erläutert.

Zur verfahrenstechnischen Modellierung des Direkt-Methanol-Brennstoffzellensystems wird das Bilanzierungsprogramm PROVISION der Firma SimSci verwendet. Verschiedene Elemente ermöglichen es, verfahrenstechnische Schritte mit Bezug auf ihre Massen- und Energiebilanzen abzubilden und Fließbilder zu erstellen. Das Programm eignet sich ausschließlich für stationäre Prozeßbetrachtungen. Für die Brennstoffzelle wurde ein verfahrenstechnisches Ersatzschaltbild erstellt, das die Darstellung ihres Verhaltens im Zusammenwirken mit dem Gesamtsystem ermöglicht.

Ein flüssiges Methanol/Wassergemisch wird der Anode zugeführt. Das Methanol oxidiert an der Anode idealerweise bis zum Kohlendioxid:

$$CH_3OH + H_2O \rightarrow CO_2 + 6H^+ + 6e^-$$

Bei der Kathodenreaktion reagieren die durch den Elektrolyten gewanderten Protonen mit den Elektronen und dem Luftsauerstoff zu Wasser:

$$6H^+ + 6e^- + \frac{3}{2}O_2 \rightarrow 3H_2O$$

Daraus ergibt sich folgende Bruttoreaktion für die Methanoloxidation (mit einer freien Reaktionsenthalpie $\Delta^R G$ von 685,3 kJ/mol und einer Ruheklemmspannung von 1,86 V bei flüssigen Produkten und gasförmigen Edukten) :

$$CH_3OH + \frac{3}{2}O_2 \rightarrow CO_2 + 2H_2O$$

Da die elektrochemische Oxidation von Methanol gehemmt ist, liegen die derzeitig erreichten Zellspannungen deutlich unter denen, die beim Einsatz von Wasserstoff in einer PEFC erzielt werden können. Ein weiteres Problem ist die Methanolpermeation durch den Elektrolyten mit anschließender Oxidation an der Kathode. Sie führt zu einer Mischpotentialbildung. Neben den Spannungsverlusten verursacht der Methanoldurchgang zusätzliche Wirkungsgradeinbußen, da die permeierte Methanolmenge nicht mehr zur Stromerzeugung zur Verfügung steht. Die Leistungswerte einer DMFC werden stark von der Betriebstemperatur und dem Druck beeinflußt. Ansteigende Temperaturen und höhere Sauerstoffpartialdrücke führen zu höheren Zellspannungen. Die Methanolpermeation nimmt allerdings auch mit steigender Temperatur zu.

Der prinzipielle Aufbau des System ist in Figur 1 dargestellt. Es handelt sich hierbei nicht um eine verfahrenstechnisch optimierte Schaltung. Dies ist aber auch für die vorgestellte Betrachtungweise nicht erforderlich. Wasser und Methanol werden im vorgegebenen Mischungsverhältnis mit Pumpen P1 und P2 auf den Betriebsdruck $p_{BZ}$ der Zelle gebracht und im Wärmetauscher WT1 vorgewärmt. Dazu wird die Abwärme des Kathodenabgases genutzt. Das Brennstoffgemisch gelangt in einen Umwälztank und wird anschließend im Wärmetauscher WT3 auf Betriebstemperatur gebracht. Die dazu notwendige Wärmemenge liefert die Abgaswärme nach dem katalytischen Brenner. Anschließend wird das Methanol/Wasser-Gemisch der Brennstoffzelle zugeführt. Eventuelle Druckverluste werden mit der Pumpe P3 ausgeglichen.

Im Anodenraum der Brennstoffzelle kommt es zur elektrochemischen Umsetzung des Methanols. Die entstehenden Protonen permeieren durch die Membran zur Kathode. Das Kohlendioxid und andere eventuell entstandene Nebenprodukte verlassen mit dem überschüssigen, nicht genutzten Brennstoff den Anodenraum und gelangen wiederum in den Umwälztank. Hier wird die gasförmige Phase abgetrennt. Um das im Abgas enthaltene dampfförmige Methanol zurückgewinnen zu können, wird das Gasgemisch im Kondensatabscheider K1 abgekühlt, und das anfallende Kondensat wieder dem Umwälztank zugeführt.

Figur 1 zeigt also eine Einrichtung für eine Direkt-Methanol-Brennstoffzelle (DMFC) mit flüssiger Brennstoffzufuhr. Kathodenseitig wird die zur Reaktion notwendige Umgebungsluft auf den Betriebsdruck $p_{BZ}$ verdichtet und anschließend mit anfallendem Produktwasser in einem Quenchkühler bis zur Sättigung befeuchtet. Dabei wird die durch die Verdichtung stark erwärmte Luft unter die Zellen-Betriebstemperatur abgekühlt. Der Luftsauerstoff reagiert an der Kathode unter Aufnahme der Elektronen mit den durch die Membran permeierten Protonen zu Wasser. Die überschüssige Luft verläßt mit dem Reaktionswasser den Kathodenraum. Das Kathodenabgas wird schrittweise erst im Wärmetauscher WT2 und anschließend im Kondensatabscheider K2 abgekühlt. Das anfallende Kondensat wird teilweise zur Luftbefeuchtung eingesetzt. Die überwiegende Menge Wasser wird jedoch wieder als Ausgangsstoff verwendet und mit Methanol gemischt der Brennstoffzelle zugeführt.

Die beiden Abgasströme, die die Kondensatabscheider K1 und K2 verlassen, werden gemischt und im Wärmetauscher WT2 vorgewärmt. Anschließend werden sie dem katalytischen Brenner zugeführt. Hier wird eventuell im Abgas enthaltenes Methanol, Kohlenmonoxid oder andere Kohlenwasserstoffverbindungen möglichst vollständig zu Wasser und Kohlendioxid umgesetzt. Um die dazu notwendige Betriebstemperatur $T_{kat}$ des Katalysators zu erreichen, muß gegebenenfalls zusätzliches Methanol zugeführt werden. Zum Abschluß wird die Druckenergie des Abgases nach dem Wärmetauscher WT3 in einer Entspannungsturbine genutzt.

Die Kühlung der Zelle erfolgt mit Wasser, das nach dem Austritt aus der Zelle in einem Luftkühler abgekühlt wird. Zur vollständigen Bestimmung der Wärmeübertragung der im System verwendeten Wärmetauscher wird jeweils eine Grädigkeit von 5 K vorgegeben. Wärmeverluste wurden nicht berücksichtigt, sämtliche Komponenten arbeiten adiabat. Weitere festgesetzte Randbedingungen sind:

| Systemparameter. | |
|---|---|
| Turbinenwirkungsgrad | 50% (adiabat) |
| Pumpenwirkungsgrad | 80% |
| Verdichterwirkungsgrad | 60% (adiabat) |
| Druckverlust Wärmetauscher | 20 mbar |
| Druckverlust Brennstoffzelle | 50 mbar |
| Methanolkonzentration | 1 M |
| water drag-Koeffizient | 4 $H_2O/H^+$ |

Neben der Wärmebilanz des Brennstoffzellenstapels wird mit Hilfe des Sytemwirkungsgrades auch die energetische Güte des Systems betrachtet. Der Systemwirkungsgrad $\eta_{System}$ setzt die elektrische Nettoleistung des Brennstoffzellenstapels ins Verhältnis zur insgesamt dem Prozeß zugeführten chemischen Energie:

$$\eta_{System} = \frac{P_{netto}}{\dot{n}_{Methanol} \cdot H_{u,\,Methanol}} \qquad \text{mit } H_u\text{, Methanol}$$

$$= 638{,}5 \text{ kJ/mol}$$

Bei der Angabe von absoluten Leistungswerten beziehen sich diese stets auf eine dem System zugeführte Methanolmenge von 1 kmol/h (ohne die zusätzlich erforderliche Methanolmenge für den katalytischen Brenner).

Bei den durchgeführten Berechnungen zeigte sich, daß sich aus der Wärmebilanz des Brennstoffzellenstapels (Stack) Einschränkungen für den Betriebsbereich einer DMFC mit flüssiger Brennstoffzufuhr ergeben. Der Spannungswirkungsgrad $\eta_U$ einer Brennstoffzelle gibt an, in welchem Verhältnis die chemische Energie des Brennstoffgemisches in elektrische Leistung $P_{BZ}$ und in Wärme umgewandelt wird. Die Abwärme macht in der Regel beim Brennstoffzellenbetrieb eine Zellenkühlung erforderlich. Die entstandene Wärme wird aber auch teilweise mit dem Abluftstrom abgeführt. Die Wärmemenge, die von der Abluft aufgenommen werden kann, wird von dem Zustand bestimmt, mit dem die Luft in die Zelle eintritt und diese wieder verläßt. Dies kann zu Problemen beim Wärmemanagement von DMFC-Brennstoffzellenstapels mit flüssiger Brennstoffversorgung führen. Kathodenseitig verdampft nicht nur das Reaktionswasser, sondern auch das durch die Membran permeierende Wasser in der überschüssigen Luft und liegt beim Austreten aus der Zelle nur zu geringen Mengen flüssig vor. Wenn die für die Phasenwechsel erforderliche Verdampfungsenthalpie nicht mehr vollständig durch die Zellenabwärme abgedeckt werden kann, müßte dem Brennstoffzellenstapel Wärme zugeführt werden, um ihn auf Betriebstemperatur zu halten.

Figur 2 verdeutlicht den Zusammenhang zwischen der elektrischen Bruttoleistung der Zelle und der Abwärme. Mit zunehmender Zellspannung steigt die Bruttoleistung linear und sinkt die Abwärme (Definition: $Q<0$ entspricht einer Wärmeabgabe). Für die hier vorgestellte Basisschaltung und den entsprechenden Betriebsparämetern, ist die kritische Zellspannung, ab dem dem Brennstoffzellenstapel Wärme zugeführt werden muß, 420 mV.

Figur 2 zeigt den Zusammenhang der elektrischen Bruttoleistung und der Abwärme eines Stapels an Direkt-Methanol-Brennstoffzellen bei folgenden Betriebsbedingungen: $T_{BZ}$=85°C, $p_{BZ}$=1,5 bar, 1 M Methanol, Luftzahl $\lambda$=2,5, $H_2O_{perm}/H^+$=4 ohne Berücksichtigung der Methanolpermeation von der Anode zur Kathode.

Der Wärmehaushalt des Brennstoffzellenstapels wird demnach von mehreren Parametern beeinflußt. Betrachtet werden im folgenden die Brennstoffzellen-Betriebstemperatur $T_{BZ}$, der Betriebsdruck $p_{BZ}$, das Luftverhältnis $\lambda$ ($\lambda=n_L/n_{L,stöch.}$) und die Methanolpermeation. Der Betriebsdruck ist hier der auf der Anoden- bzw. Kathodenseite herrschende Druck ($P_{Betrieb} = P_{Kathodenseite} = P_{Anodenseite}$). Für $\lambda$ = 1 wird gerade die stöchiometrische erforderliche Luftmenge zugeführt. Bei Luftüberschuß ergibt sich folgende Gesamtreaktionsgleichung: $CH_3OH + (3/2)\lambda O_2 \rightarrow CO_2 + 2H_2O + (\lambda-1)(3/2)O_2$. In den durchgeführten Berechnungen bezieht sich $\lambda$ immer auf die in der Brennstoffzelle umgesetzte Methanolmenge. Hierbei wird sowohl die zur Stromerzeugung genutzte Methanolmenge wie auch die permeierende Methanolmenge berücksichtigt.

Der Einfluß einer Temperaturvariation auf den Wärmehaushalt der Brennstoffzelle wird in Figur 3 verdeutlicht. Eine Temperaturerhöhung hat erhebliche Auswirkungen auf die Zellenabwärme. Die Wärmemenge nimmt exponentiell zur steigenden Temperatur ab. Die Brennstoffzellenabwärme beträgt bei 60 °C 132,2 kW und fällt bei 90 °C auf einen Wert von 60,4 kW ab. Bei einer Betriebstemperatur von 110°C besitzt die Brennstoffzelle kaum noch Abwärme, d.h. mit zunehmender Betriebstemperatur müßte die Zelle beheizt werden, um die Betriebstemperatur konstant halten zu können, d.h. der potentielle Systemwirkungsgrad sinkt bei Temperaturerhöhungen über 100 °C rapide. Bei einer Betriebstemperatur von 110 °C beträgt der potentielle Systemwirkungsgrad nur noch 5,8 %.

Figur 3 verdeutlicht den Einfluß der Brennstoffzellenstapel-Temperatur auf die Zellenabwärme $Q_{BZ}$ und den Systemwirkungsgrad bei konstanter Zellspannung. Die Brennstoffzellenstapelbetriebsbedingungen sind: U=400 mV, $p_{BZ}$=2,4 bar, 1 M Methanol, $\lambda$=2,5, $H_2O_{perm}/H^+$=4, $T_{kat}$=150 °C, ohne Berücksichtigung der Methanolpermeation. Bei der Variation der Betriebstemperatur wurde eine höhere Betriebstemperatur des katalytischen Brenners gewählt, um bei der Vorwärmung des Brennstoffgemisches im Wärmeübertrager WT3 genügend Wärme zur Verfügung stellen zu können.

Der Druck und zwar insbesondere der auf der Kathodenseite hat einen entscheidenden Einfluß auf den Gesamtwirkungsgrad. Mit steigendem Druck steigt der zur Verdichtung erforderliche Eigenbedarf und des Systemwirkungsgrad sinkt. Allerdings führt eine Druckabsenkung zu Problemen beim Wärmemanagement. Figur 4 verdeutlicht diesen Einfluß des Druckes auf die Abwärme. Mit sinkendem Kathodendruck nimmt die Abwärme des Brennstoffzellenstapels stark ab.

Figur 4 zeigt den Einfluß des Kathodendruckes auf die Brennstoffzellenabwärme. Die Betriebsbedingungen der Brennstoffzelle sind: U=400 mV, $T_{BZ}$=85 °C, 1 M Methanol, $\lambda$=2,5, $H_2O_{perm}/H^+$=4, $T_{kat}$=150 °C, ohne Berücksichtigung der Methanolpermeation.

Figur 5 zeigt den Einfluß des Luftverhältnisses auf die Brennstoffzellenabwärme. Die Betriebsbedingungen sind: U=400 mV, $T_{BZ}$=85 °C, $p_{BZ}$=1,5 bar, 1 M Methanol, $H_2O_{perm}/H^+$=4, $T_{kat}$=125 °C, ohne Berücksichtigung der Methanolpermeation.

Auch das Luftverhältnis beeinflußt die Brennstoffzellenabwärme, wie aus der Figur 5 hervorgeht. Je größer die Luftmengen sind, desto mehr Wärme kann aus der Zelle ausgetragen werden. Da zudem die erforderliche Verdichterleistung den Systemwirkungsgrad stark beeinflußt, unterstreicht dieses Ergebnis die Notwendigkeit, die Brennstoffzelle mit kleinen Luftverhältnissen zu betreiben.

Die Permeation von Methanol durch die Membran wurde in den vorherigen Betrachtungen vernachlässigt, da die Reduzierung der Permeation ein vorrangiges Ziel weiterer Entwicklungsanstrengungen ist. Berücksichtigt man die Methanoldurchlässigkeit der Membran, so wird bei einer vollständigen Oxidation der permeierenden Methanolmenge an der Kathode zusätzlich die Oxidationsabwärme $\dot{q}_{Perm,Ox}$ frei, die den Wärmehaushalt des Brennstoffzellenstapels beeinflußt.

$$\dot{q}_{Perm,\,Ox} = \dot{n}_{Methanol,\,perm} \cdot H_u$$

Figur 6 zeigt die Berechnungsergebnisse. Eine Methanolpermeation von 0,01 kmol/kmol Protonen bewirkt bei einer Zunahme der Abwärme um 2,5 kW allerdings eine Einbuße des Systemwirkungsgrades von rd. 2%-Punkten.

Figur 6 zeigt den Einfluß der Methanolpermeation auf den Wärmehaushalt und den Systemwirkungsgrad. Die Betriebsbedingungen sind: U=400 mV, $p_{BZ}$=2,4 bar, 1 M Methanol, $\lambda$=2,5, $H_2O_{perm}/H^+$=4, $T_{kat}$=125 °C.

Die vorgestellten Ergebnisse beziehen sich alle auf eine Wasserpermeation (von der Anode zur Kathode durch die Membran hindurch) von 4 Wassermolekülen pro Proton. Zusätzlich entsteht pro Proton ein halbes Wassermolekül durch die Kathodenreaktion. Eine Reduktion der im Kathodenraum zur Verdampfung zur Verfügung stehenden Wassermenge wirkt sich positiv auf die Wärmebilanz des Brennstoffzellenstapels aus. Eine methanolundurchlässige Sperrschicht, die kein oder nur wenig Wasser durchläßt, könnte das Problem lösen. Figur 7 zeigt den Einfluß der permeierenden Wassermenge auf die Abwärme bei zwei unterschiedlichen Betriebspunkten (ohne Berücksichtigung der Methanolpermeation). Nur die Wasserreduktion deutlich unter ein Mölekül pro Proton bringt den erhofften Anstieg der Abwärme. Bei derartigen Betriebszuständen besteht allerdings die Gefahr, daß die Membran austrocknet.

Eine verfahrenstechnische Möglichkeit die Verdampfung des Reaktionswassers bzw. des permeierenden Wassers im Kathodenraum zu begrenzen, besteht in einer stärkeren Vorwärmung und Befeuchtung der Zuluft. Figur 8 zeigt die starke Zunahme der Zellenabwärme bei Anheben der Luftbefeuchtertemperatur. Die Luftbefeuchtertemperatur wurde zwischen 35 °C und 85 °C (BZ-Betriebstemperatur) variiert. Es wurde zusätzlich die reine Vorwärmung der bei 35 °C gesättigten Luft betrachtet. Die Erhöhung der Lufteintrittstemperatur ohne zusätzliche Befeuchtung hat nur schwache Auswirkungen auf die Wärmebilanz des Brennstoffzellenstapels.

Da die spezifischen Leistungwerte mit steigender Luftbefeuchtertemperatur abnehmen, sind diese Lösungsvorschläge nicht sinnvoll. Auch systemtechnisch erweist es sich als schwierig, die zur Befeuchtung und Vorwärmung notwendige Wärmemenge auf dem entsprechenden Energieniveau ohne Abnahme des Systemwirkungsgrades zur Verfügung zu stellen.

Figur 8 zeigt die Abhängigkeit der Brennstoffzellenabwärme von der Temperatur der zugeführten Luft, wobei die Betriebsbedingungen sind: $T_{BZ}$=85 °C, $p_{BZ}$=1,5 bar, 1 M Methanol, U=400 mV; $\lambda$=2,5, $H_2O_{perm}/H^+$=4.

Den vorgenannten Ausführungen ist zu entnehmen, auf welche Parameter und in welcher Weise bei der Optimierung besonders zu achten ist.

Ziel der Optimierung der Betriebsparameter ist die Maximierung des Systemwirkungsgrades bei gleichzeitiger Minimierung des erforderlichen Kühlbedarfs des Brennstoffzellenstapels unter Berücksichtigung der Wechselwirkungen zwischen den einzelnen Parametern.

Aus den beschriebenen Einflußgrößen lassen sich für konstante Zellspannungen Kennfelder ermitteln, die sinnvolle Betriebsbereiche für Direkt-Methanol-Brennstoffzellensysteme mit flüssiger Brennstoffzufuhr hinsichtlich der Wärmebilanz eingrenzen. Figur 9 zeigt ein Beispiel für eine Zellspannung von 500 mV. Aus der Forderung eines niedrigen Kathodendrucks, um die erforderliche Verdichterleistung zu reduzieren, ergibt sich als Konsequenz eine niedrige Betriebstemperatur der verwendeten Brennstoffzellen. Bei einer Temperatur von 110°C muß bei einem Luftverhältnis von 1,75 der Kathodendruck mindestens 3 bar betragen, damit der Brennstoffzellenstapel überhaupt betrieben werden kann. Betriebstemperaturen von 130 °C sind systemtechnisch nicht sinnvoll auch wenn sie bessere Leistungswerte für den Brennstoffzellenstapel versprechen. Sie erfordern einen Kathodendruck von ca. 6 bar, und der elektrische Eigenbedarf zur Luftverdichtung würde den Systemwirkungsgrad drastisch verringern. Die beschriebene Situation verschlechtert sich mit zunehmenden Zellspannungen und limitiert so für verschiedene Betriebspunkte der Zelle die erlaubten Betriebsparameter.

Figur 9 zeigt ein Betriebskennfeld einer flüssig betriebenen DMFC bei U=500 mV, wobei die Betriebsbedingungen sind: 1 M Methanol, $H_2O_{perm}/H^+$=4.

Berücksichtigt man nun in einer Gesamtbetrachtung die erreichbaren Systemwirkungsgrade, lassen sich Arbeitsfenster ermitteln, in denen der Betrieb am günstigsten ist, d.h. wenig Kühlbedarf bei hohen Wirkungsgraden.

Figur 10 zeigt die Berechnungsergebnisse bei einer konstanten Zellspannung. Die höchsten Wirkungsgrade lassen sich bei niedrigen Betriebsdrücken erreichen. Die Nebenbedingung, den Kühlbedarf zu senken, führt zu optimalen Betriebsbedingungen von rd. 86 °C und 1,6 bar.

Berücksichtigt man die Temperatur- und Druckabhängigkeit der Zellspannung, so verlagert sich das beschriebene optimale Arbeitsfenster zu höheren Temperaturen und Drüc??ken. Die folgenden Abbildungen verdeutlichen diesen Effekt. Figur 11 zeigt die Ergebnisse für eine Spannungszunahme von 5 mV bei einer Druckerhöhung von 1 bar bzw. 5 mV bei einem Betriebstemperaturanstieg von 1K ausgehend von einem Referenzpunkt von 500 mV bei 90 °C und 2 bar. Bei einer größeren Abhängigkeit von der Temperatur und dem Druck zeigt sich diese Verlagerung noch ausgeprägter (s.Figur 12).

Figur 10 zeigt das Betriebskennfeld bei konstanter Zellspannung U=500 mV, wobei die Betriebsbedingungen sind: 1 M Methanol, $H_2O_{perm}/H^+$=4, $T_{kat}$=150°C, $\lambda$=2, ohne Berücksichtigung der Methanolpermeation.

Figur 11 zeigt ein Betriebskennfeld bei näherungsweise temperatur- und druckabhängigen Zellspannungen U=f($T_{BZ}$, $p_{BZ}$) (5 mV/bar, 5 mV/K: bezogen auf den Referenzpunkt U=500 mV bei 90 °C, 2 bar) (Brennstoffzellenstapelbetriebsbedingungen: 1 M Methanol, $H_2O_{perm}/H^+$=4, $T_{kat}$=150°C, $\lambda$=2, ohne Berücksichtigung der Methanolpermeation).

Figur 12 zeigt ein Betriebskennfeld bei temperatur- und druckabhängigen Zellspannungen U=f($T_{BZ}$, $p_{BZ}$) (10 mV/bar, 10 mV/K: bezogen auf den Referenzpunkt U=500 mV bei 90 °C, 2 bar) (Brennstoffzellenstapelbetriebsbedingungen: 1 M Methanol, $R_2O_{perm}/H^+=4$, $T_{kat}=150°C$, λ=2, ohne Berücksichtigung der Methanolpermeation).

Bei den folgenden Betrachtungen wird zusätzlich die Methanolpermeation in Abhängigkeit von der Temperatur berücksichtigt. Es wurde bereits experimentell nachgewiesen, daß mit steigender Betriebstemperatur die permeierende Methanolmenge zunimmt. Die Berechnungen führen zu den folgenden Ergebnissen. Die erreichbaren Systemwirkungsgrade nehmen deutlich ab. Insgesamt verschiebt sich bei konstanten Spannungen der Arbeitsbereich mit den höchsten Wirkungsgraden zu niedrigen Temperaturen und Drücken. Bei diesen Betriebsparametern liegt allerdings ein hoher Kühlbedarf vor. Die Reduzierung des Kühlbedarfs ist jedoch mit Wirkungsgradeinbußen verknüpft, wie der Figur 13 zu entnehmen ist.

Figur 13 zeigt ein Betriebskennfeld bei konstanter Zellspannung U=500 mV (Brennstoffzellenstapelbetriebsbedingungen: 1 M Methanol, $H_2O_{perm}/H^+=4$, $T_{kat}=150°C$, λ=2, mit Berücksichtigung der Methanolpermeation in Abhängigkeit von der Temperatur).

Die nachfolgende zusätzliche Berücksichtigung der Spannungszunahme mit steigender Brennstoffzellenstapeltemperatur und steigendem Druck (in diesem Fall beispielhaft eine Spannungszunahme von 20 mV bei einer Druckerhöhung von 1 bar bzw. 5 mV bei einem Betriebstemperaturanstieg von 1K ausgehend von einem Referenzpunkt von 500 mV bei 90 °C und 2 bar) bei gleichzeitiger Abhängigkeit der Methanolpermeation von der Temperatur führt zu einer eindeutigeren Eingrenzung optimaler Bertriebsparameter. Niedrige Drücke führen bei Temperaturen über 85 °C zu den höchsten Systemwirkungsgraden bei gleichzeitig geringer erforderlicher Kühlleistung (siehe Figur 14).

Figur 14 zeigt ein Betriebskennfeld bei temperatur- und druckabhängigen Zellspannungen $U=f(T_{BZ}, p_{BZ})$ (20 mV/bar, 5 mV/K: bezogen auf den Referenzpunkt U=500 mV bei 90 °C, 2 bar) (Brennstoffzellenstapelbetriebsbedingungen: 1 M Methanol, $H_2O_{perm}/H^+=4$, $T_{kat}=150°C$, λ=2, mit Berücksichtigung der Methanolpermeation in Abhängigkeit von der Temperatur).

Anhand von Figur 10 wird nun die Durchführung des anspruchsgemäßen Verfahrens verdeutlicht. Gezeigt wird ein Betriebskennfeld einer Niedertemperatur-Brennstoffzelle bei einer konstanten Zellspannung von 500 mV dargestellt. Als Brennstoff wird ein ein kmol/h Methanol eingesetzt.

Die Wasserpermeation beträgt 4 Wassermoleküle pro Proton. Hierunter ist zu verstehen, daß von der Anodenseite ein Wasserstoffmolekül durch die Membran hindurch zur Kathodenseite gelangt, wenn zugleich 4 Protonen die Membran passieren.

Im Betriebskennfeld gemäß Fig. 10 ist der auf der Kathodenseite herrschende Druck gegen die Temperatur aufgetragen. Die punktierten Linien in Fig. 1 zeigen den Verlauf von erreichbaren Systemwirkungsgraden. Die ansteigenden durchgezogenen Linien geben die durch die Brennstoffzelle erzeugte überschüssige Wärme, also die Abwärme an. Durch Fettdruck wird die Linie hervorgehoben, bei der die Abwärme = 0 ist. Links von dieser fettgedruckten Linie aus gesehen, wird durch die Brennstoffzelle Abwärme erzeugt. Eine überschüssige Abwärme wird hier mit negativen Zahlen angegeben. Rechts von der fettgedruckten Linie muß der Brennstoffzelle für den Betrieb extern Wärme zugeführt werden.

Im folgenden wird von einem in der Praxis erzielbaren maximalen Systemwirkungsgrad der Brennstoffzelle von 0,4, also 40% ausgegangen. Die durch die Brennstoffzelle erzeugte elektrische Leistung betrage 100 KW. In der Figur ist durch Schraffur ein Fenster eingezeichnet. Das Fenster umfaßt Abwärmen von 0 bis 50 KW (da die negativen Zahlen die Abwärme in KW wiedergeben). Das Fenster erstreckt sich ferner von einem Systemwirkungsgrad von 0,4 bis 0,36. Es erstreckt sich folglich vom maximal in der Praxis erzielbaren Systemwirkungsgrad bis zu einem Systemwirkungsgrad, der 10 % geringer ist als der in der Praxis maximal erzielbare.

Erfindungsgemäß sind Druck und Temperatur nun so zu wählen, daß diese sich im Bereich des Fensters befinden. Beispielsweise kann die Temperatur 90° C und der auf der Kathodenseite herrschende Druck 2,0 bar betragen, um erfindungsgemäß zu guten Betriebsbedingungen zu gelangen.

In Figur 11 wird gezeigt, wie sich das Betriebskennfeld bei Veränderung sonstiger Bedingungen verändern kann. Hier verlaufen die Graphen für den Systemwirkungsgrad sowie für die Abwärme im wesentlichen parallel. Anstelle eines abgeschlossenen Fensters resultiert dann ein Streifen, der für die Wahl von Druck und Temperatur maßgeblich ist.

Grundsätzlich kann das Verfahren auch für gasförmige Brennstoffe vorgesehen werden. Allerdings muß ein mit gasförmigem Methanol betriebener Brennstoffzellenstapel stets gekühlt werden. Die Abwärme tritt daher nicht als Randbedingung des Optimierungsproblems auf. Unter diesen Voraussetzungen bezieht sich die erfindungsgemäße Lehre auf Brennstoffzellen, die mit flüssigem Brennstoff betrieben werden.

## Patentansprüche

1. Verfahren zum Einstellen von dem Druck auf der Kathodenseite sowie der Betriebstemperatur einer Niedertemperatur-Brennstoffzelle, die mit flüssigem Brennstoff betrieben wird, indem der vorgenannte Druck und die vorgenannte Temperatur so gewählt werden, daß einerseits der in der Praxis maximal erzielbare Systemwirkungsgrad im wesentlichen erreicht und andererseits durch die Brennstoffzelle eine Abwärme erzeugt wird, die wesentlich unterhalb der durch die Brennstoffzelle erzeugten elektrischen Leistung liegt.

**2.** Verfahren nach Anspruch 1, bei dem der Druck gegen die Temperatur bei konstanter Spannung der Brennstoffzelle aufgetragen wird, in dieses Diagramm die Kennlinien für den Systemwirkungsgrad und für die Abwärme eingetragen werden, ein Bereich in dem Diagramm so ausgewählt wird, daß dieser Bereich Abwärmen von 0 bis halber Leistung der erzeugten elektrischen Leistung der Brennstoffzelle einschließt und ferner Systemwirkungsgrade umfaßt, die zwischen dem in der Praxis maximal erzielbaren Systemwirkungsgrad und 90% davon liegen und ein Druck-Temperatur-Paar aus diesem Bereich als Kathodendruck und Betriebstemperatur für die Brennstoffzelle gewählt werden.

### Claims

**1.** Method for optimising the cathode pressure and the operating temperature of a low temperature fuel cell system operated by means of liquid fuel, in which said pressure and said temperature are selected such that on the one hand the desired maximum system efficiency to be obtained during practical operation, can be substantially reached and that on the other hand there is recovered by means of the fuel cell an amount of waste heat ranging substantially below the electrical power produced by the fuel cell.

**2.** Method according to claim 1, wherein the ratio between the pressure and the temperature value of the fuel cell is applied at constant tension, and that in said diagram are indicated the operating parameters of the degree of system efficiency and of the waste heat, and that one range in said diagram is selected such that said range includes waste heat values between 0 and half the capacity of the produced electrical power and further comprises system efficiency degrees ranging between the maximum system efficiency obtained during practical operation and 90 % thereof, and that a pair of pressure/temperature values is selected in this range used as the cathode pressure and the operating temperature for the fuel cell.

### Revendications

**1.** Méthode d'optimisation de la pression de la cathode ainsi que de la température opérationnelle d'un système de pile à combustible à basse température opérée à l'aide d'un combustible liquide, et dans laquelle la pression et la température précitées sont choisies telles que d'une part la puissance maximum du système obtenu dans la pratique est principalement réalisé, et que d'autre part cette pile produit une chaleur de dissipation dont la valeur est située essentiellement en dessous de la puissance électrique du système de pile.

**2.** Méthode d'optimisation suivant la revendication 1, dans laquelle la pression par rapport à la température est appliquée à tension constante de la pile de combustible, et que les lignes de fonctionnement caractéristiques de la puissance du système et de la chaleur de dissipation sont reportées dans ce diagramme, et dans laquelle une gamme de ce diagramme est choisie de façon telle que cette gamme comprend des valeurs de la chaleur de dissipation variant entre 0 et 50 % de la puissance de la pile de combustible et comprend en outre des valeurs de puissance du système situées entre la valeur de puissance du système obtenue dans la pratique et 90 % de cette dernière, et qu'une paire des valeurs de la pression et de la température est choisie dans cette gamme comme la pression de cathode et la température pour ladite pile de combustible.

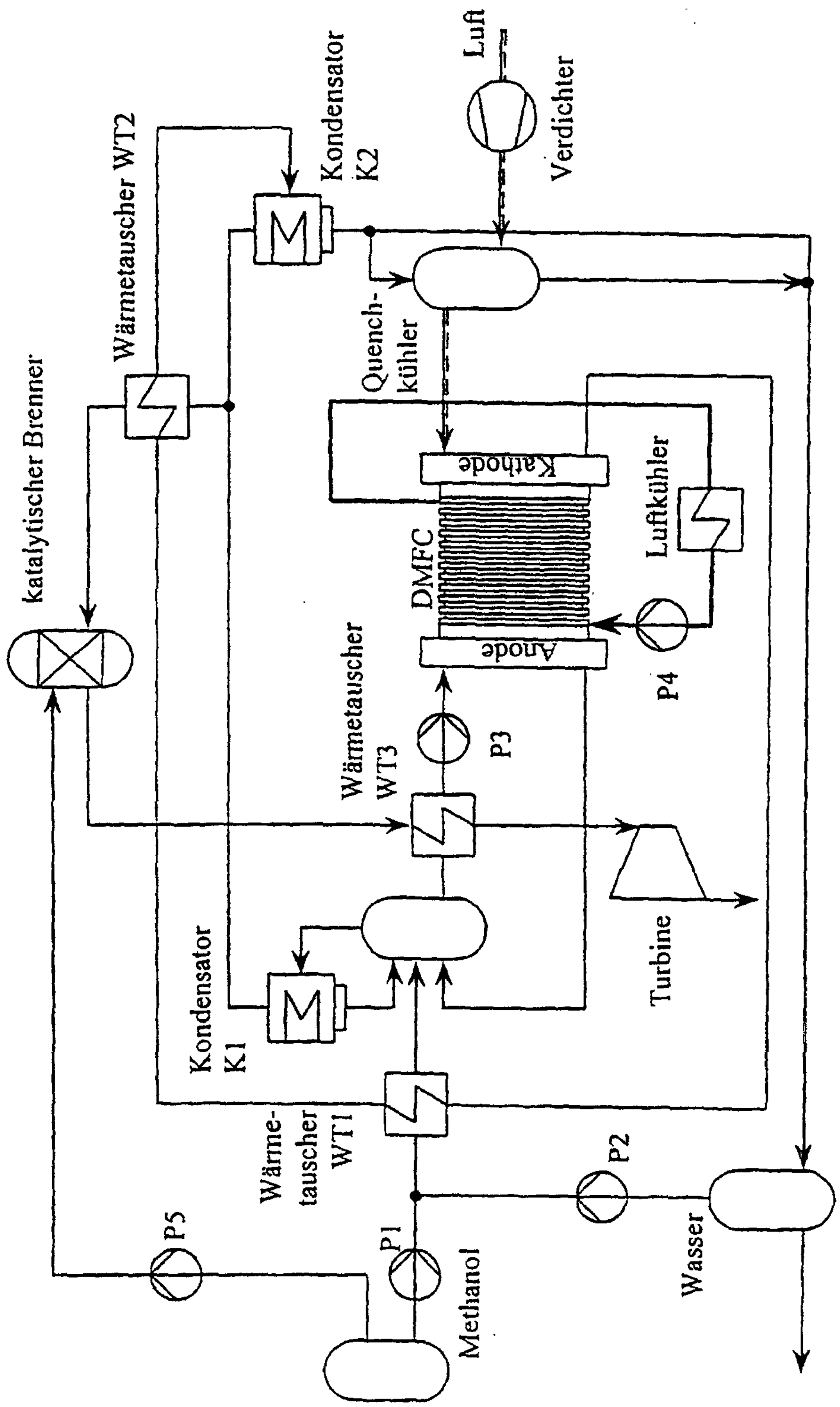

katalytischer Brenner
Wärmetauscher WT2
Kondensator K2
Luft
Verdichter
Quench-
kühler
Kathode
Luftkühler
DMFC
Anode
P4
Wärmetauscher WT3
P3
Turbine
Kondensator K1
Wärme-
tauscher
WT1
P1
P2
P5
Methanol
Wasser


Figur 1

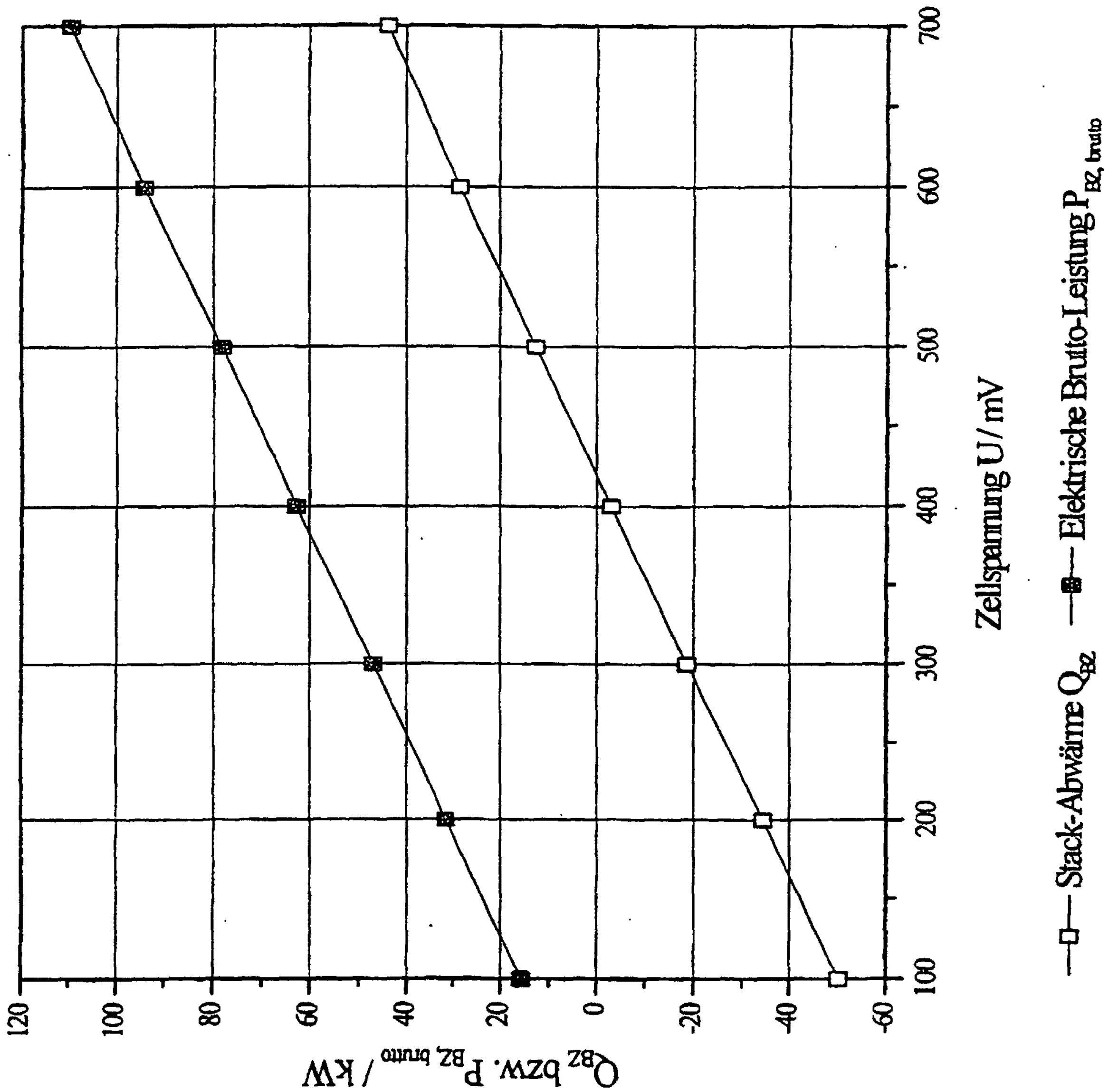
120
100
80
60
40
20
0
-20
-40
-60
$Q_{BZ}$ bzw. $P_{BZ, brutto}$ / kW
100
200
300
400
500
600
700
Zellspannung U / mV
Stack-Abwärme $Q_{BZ}$
Elektrische Brutto-Leistung $P_{BZ, brutto}$

Figur 2

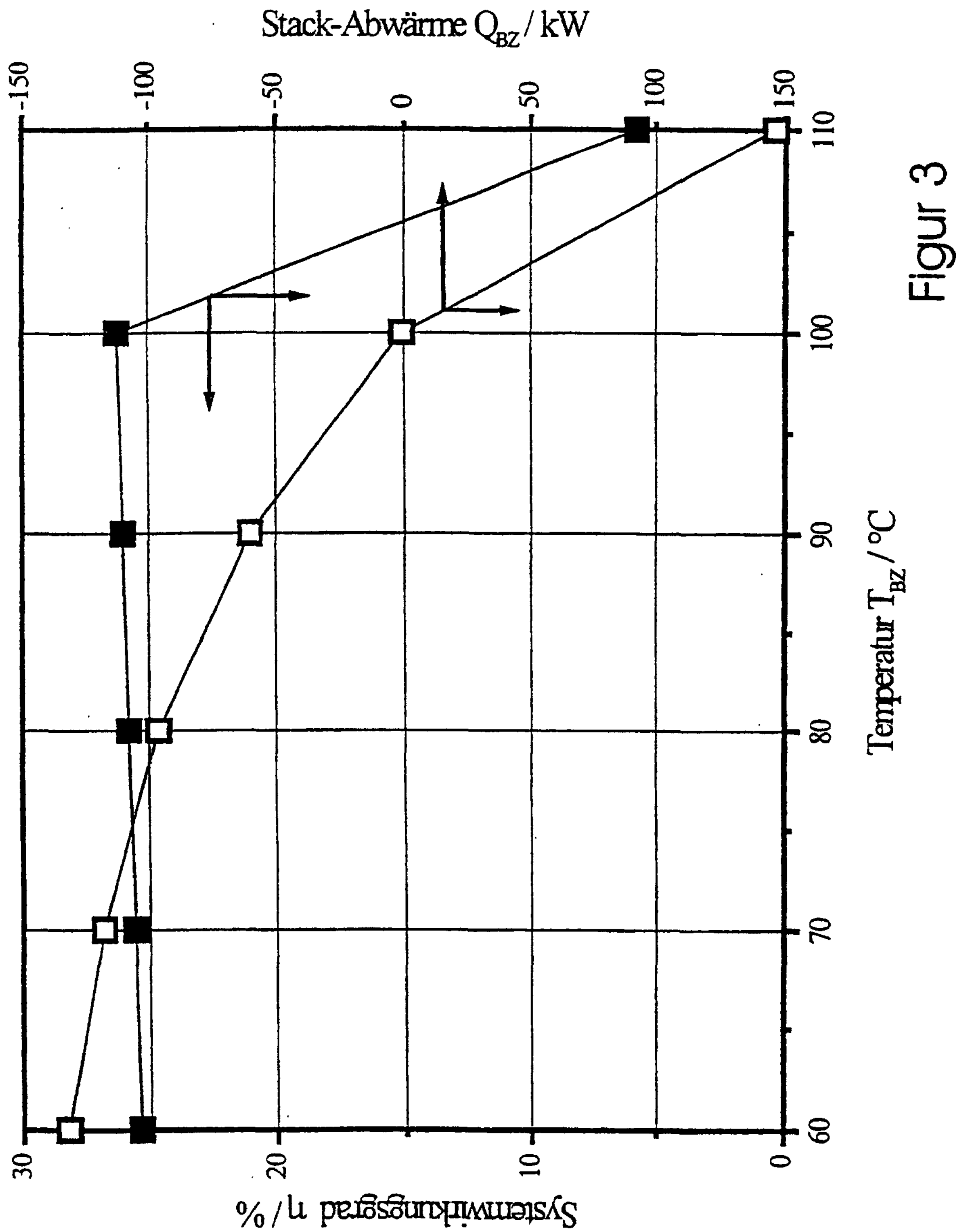
Stack-Abwärme $Q_{BZ}$ / kW
-150
-100
-50
0
50
100
150
Systemwirkungsgrad η / %
30
20
10
0
Temperatur $T_{BZ}$ / °C
60
70
80
90
100
110

Figur 3

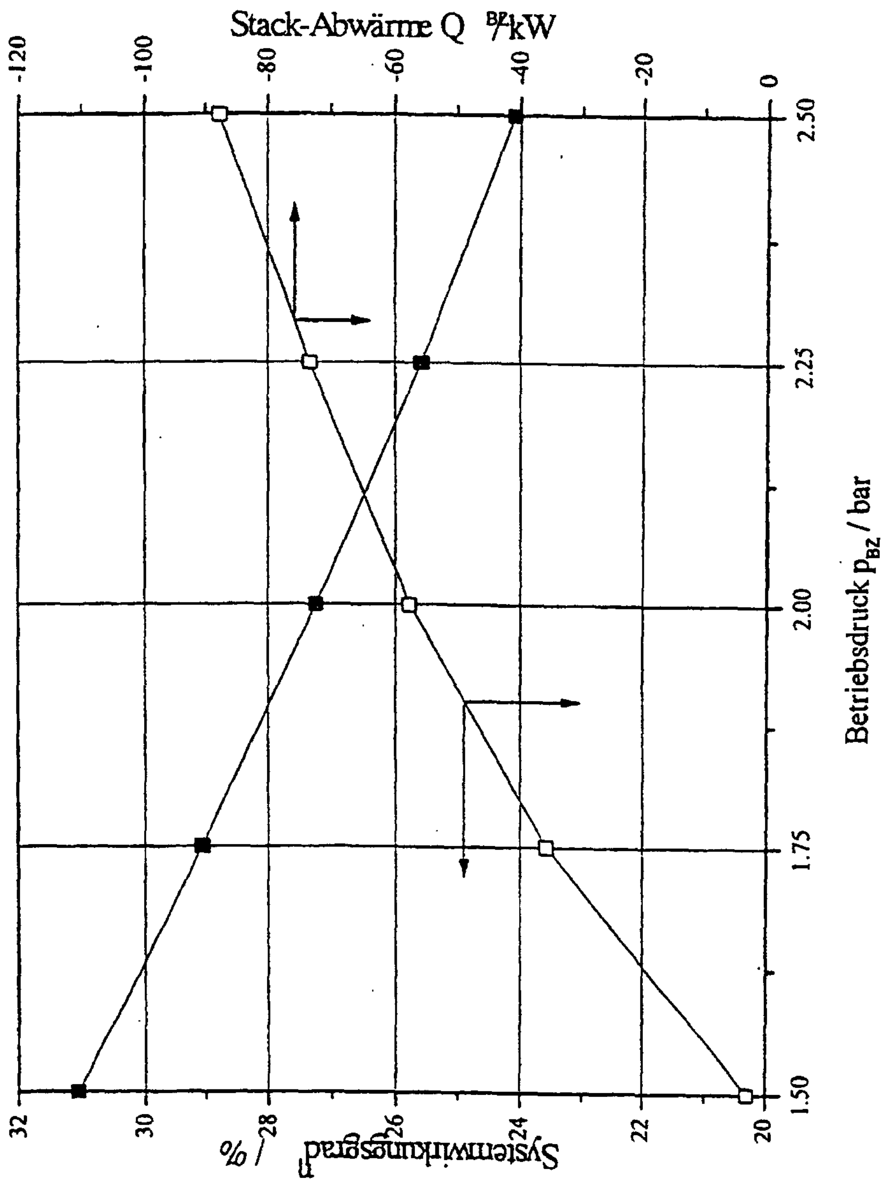
Stack-Abwärme Q BZ/kW
-120
-100
-80
-60
-40
-20
0
Betriebsdruck p BZ / bar
1.50
1.75
2.00
2.25
2.50
Systemwirkungsgrad η / %
32
30
28
26
24
22
20

Figur 4

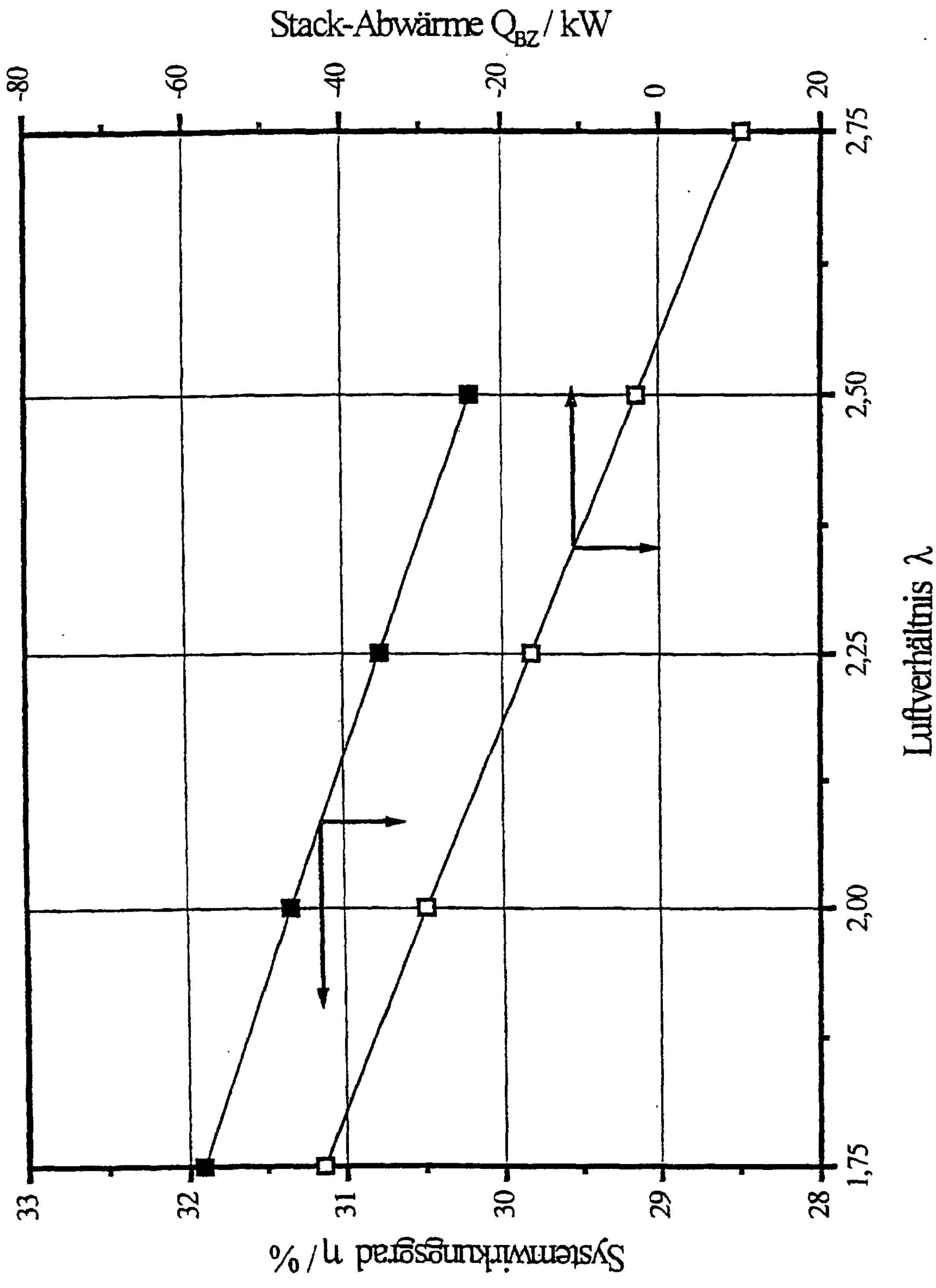
Stack-Abwärme $Q_{BZ}$ / kW
-80
-60
-40
-20
0
20
1,75
2,00
2,25
2,50
2,75
Luftverhältnis λ
33
32
31
30
29
28
Systemwirkungsgrad η / %

Figur 5

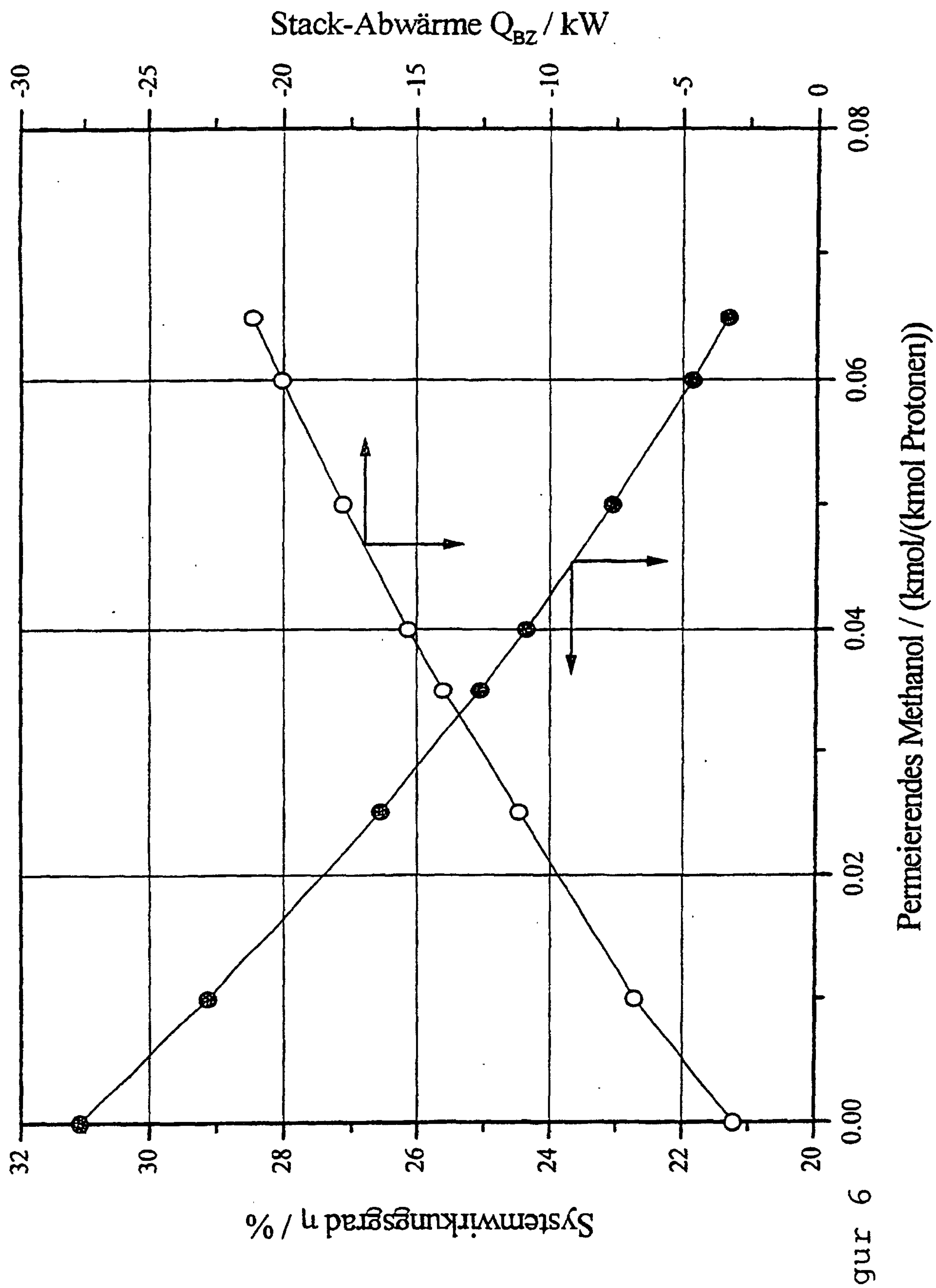
Stack-Abwärme $Q_{BZ}$ / kW
-30
-25
-20
-15
-10
-5
0
Systemwirkungsgrad η / %
32
30
28
26
24
22
20
Permeierendes Methanol / (kmol/(kmol Protonen))
0.00
0.02
0.04
0.06
0.08

Figur 6

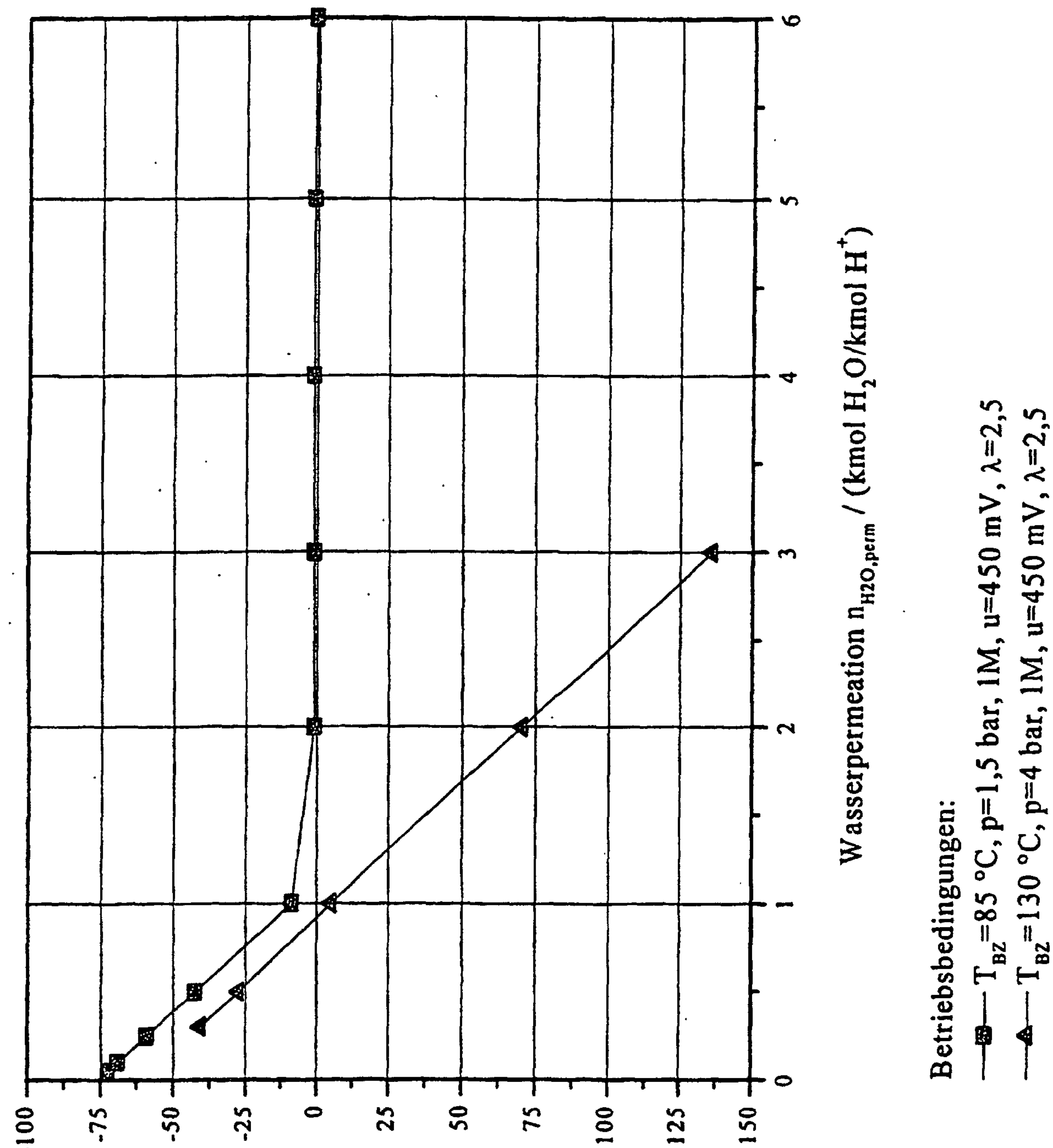
-100
-75
-50
-25
0
25
50
75
100
125
150
Brennstoffzellenabwärme $Q_{BZ}$ / kW
0
1
2
3
4
5
6
Wasserpermeation $n_{H2O,perm}$ / (kmol $H_2O$/kmol $H^+$)
Betriebsbedingungen:
$T_{BZ}$=85 °C, p=1,5 bar, 1M, u=450 mV, λ=2,5
$T_{BZ}$=130 °C, p=4 bar, 1M, u=450 mV, λ=2,5

**Figur 7**

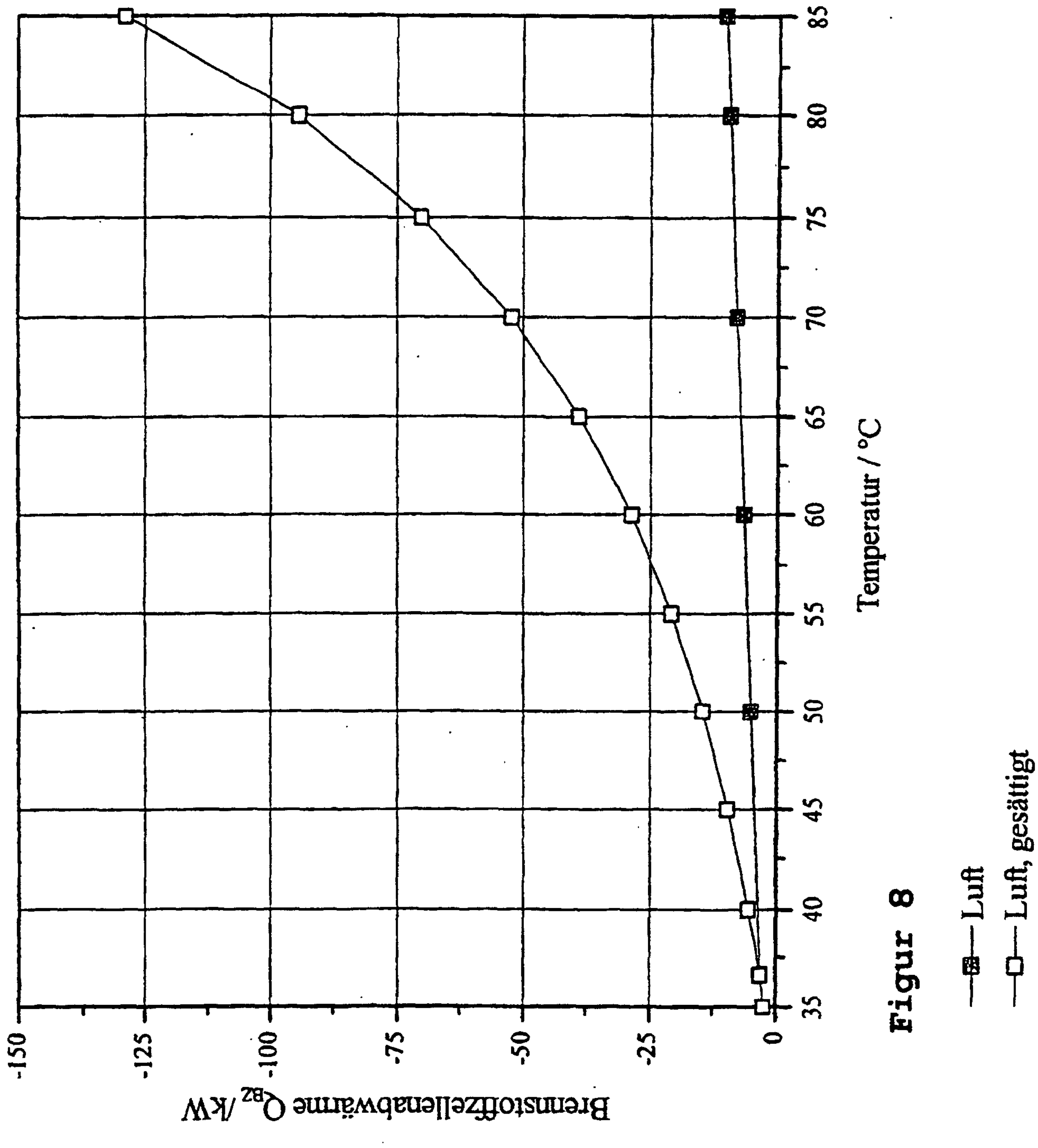

-150
-125
-100
-75
-50
-25
0
Brennstoffzellenabwärme $Q_{BZ}$ /kW
35
40
45
50
55
60
65
70
75
80
85
Temperatur / °C
Luft
Luft, gesättigt


Figur 8

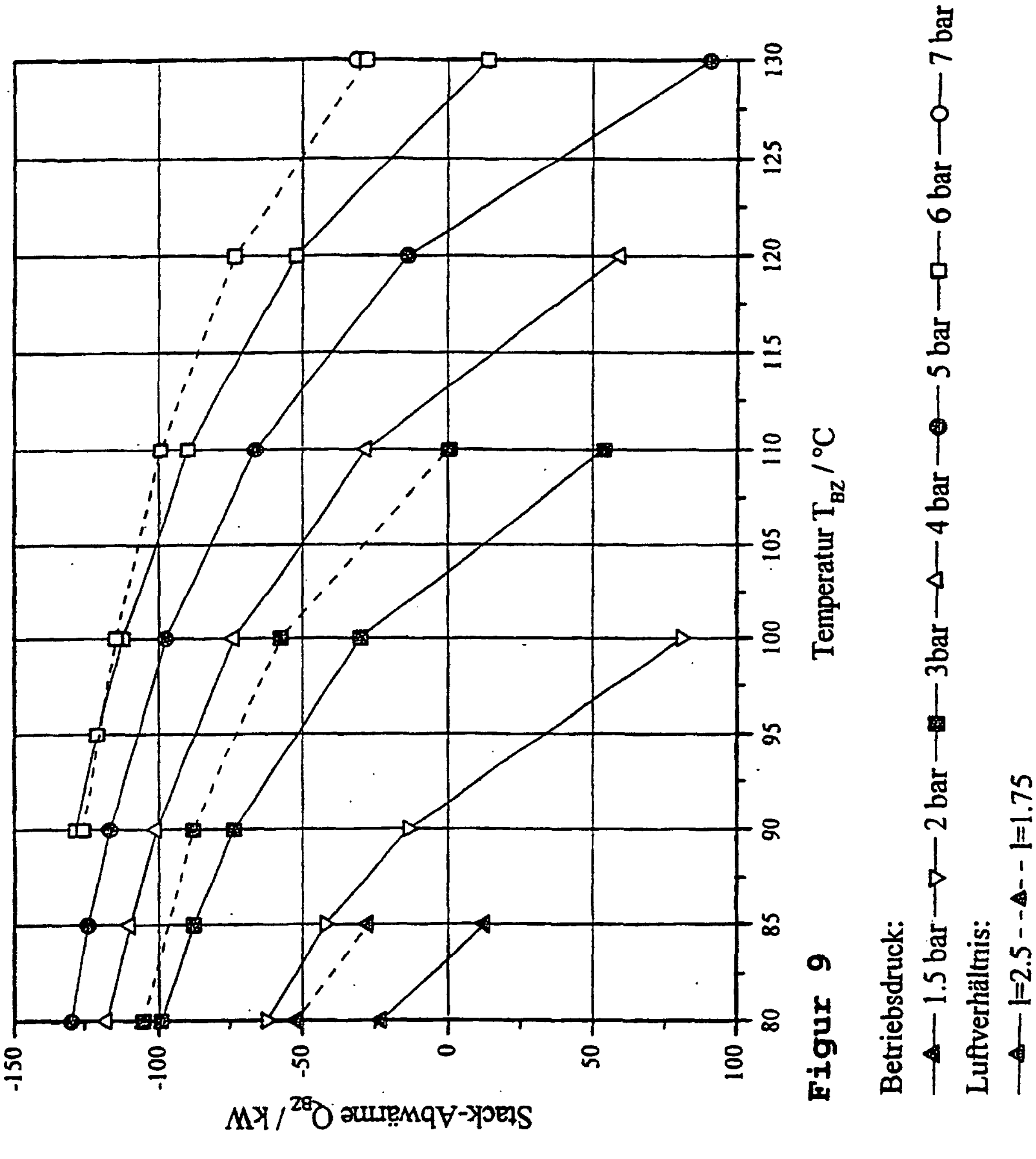
-150
-100
-50
0
50
100
Stack-Abwärme $Q_{BZ}$ / kW
80
85
90
95
100
105
110
115
120
125
130
Temperatur $T_{BZ}$ /°C
Betriebsdruck:
1.5 bar
2 bar
3bar
4 bar
5 bar
6 bar
7 bar
Luftverhältnis:
l=2.5
l=1.75

Figur 9

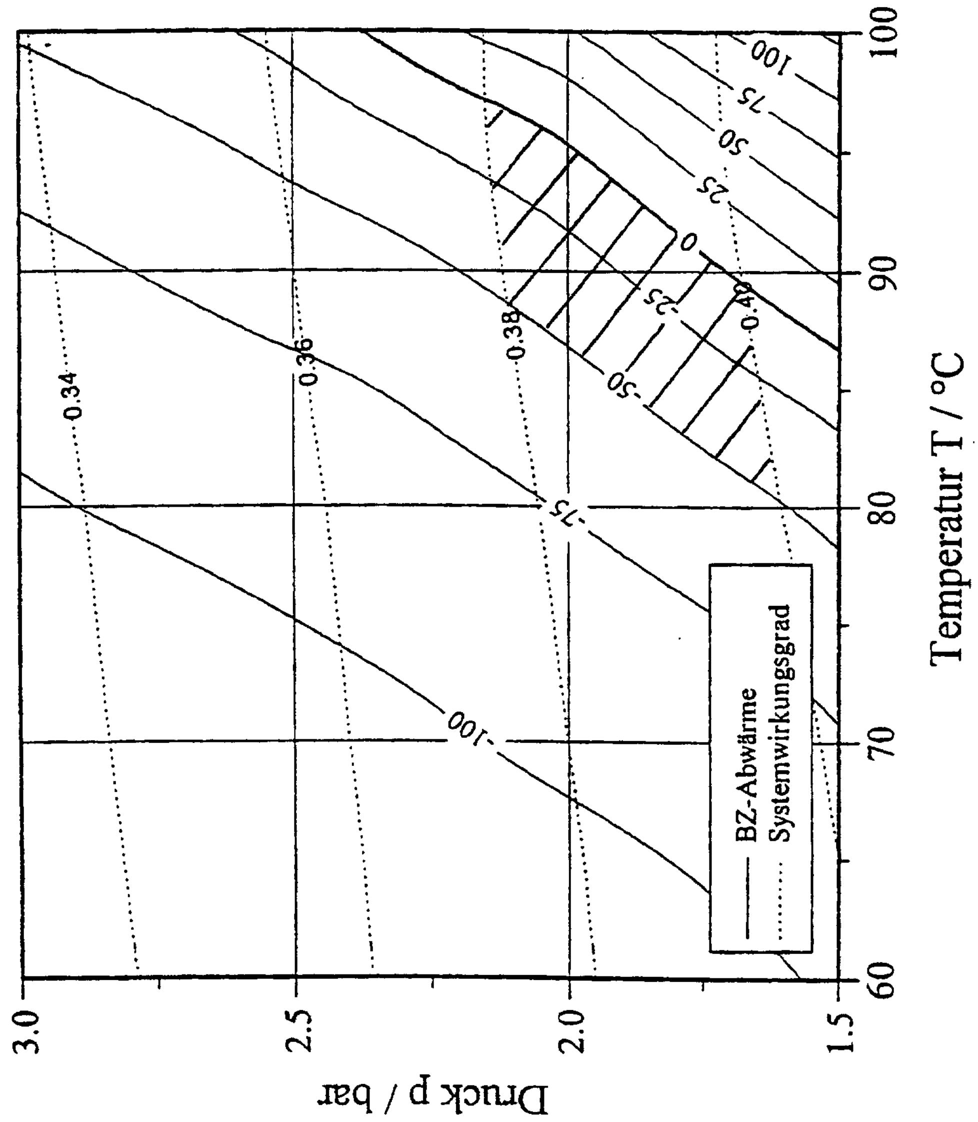

Druck p / bar
3.0
2.5
2.0
1.5
Temperatur T / °C
60
70
80
90
100
BZ-Abwärme
Systemwirkungsgrad
0.34
0.36
0.38
0.40
-100
-75
-50
-25
0
25
50
75
100


Figur 10

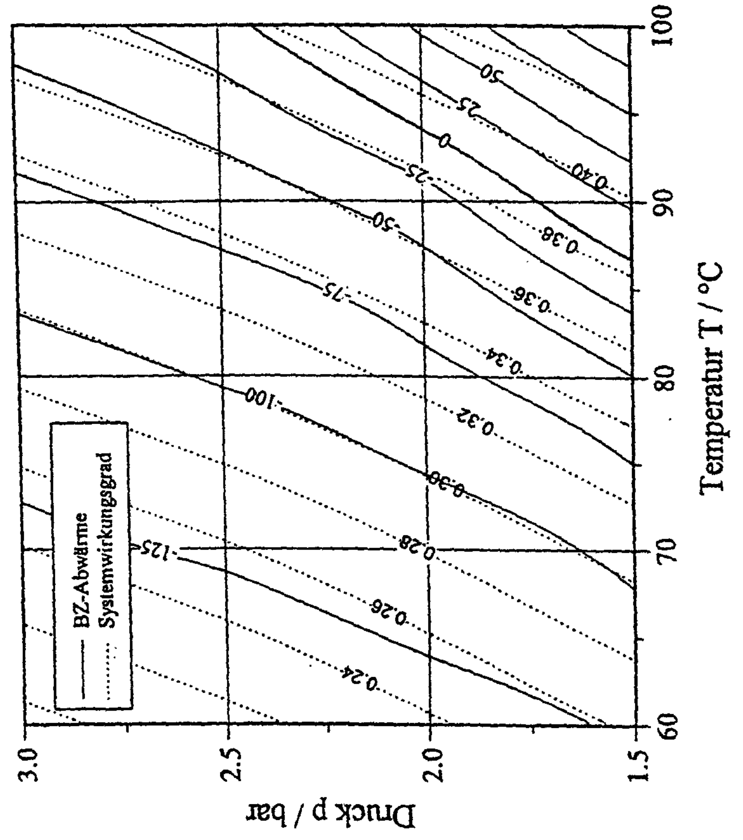

BZ-Abwärme
Systemwirkungsgrad
Druck p / bar
Temperatur T / °C
3.0
2.5
2.0
1.5
60
70
80
90
100
-125
-100
-75
-50
-25
0
25
50
0.24
0.26
0.28
0.30
0.32
0.34
0.36
0.38
0.40


Figur 11

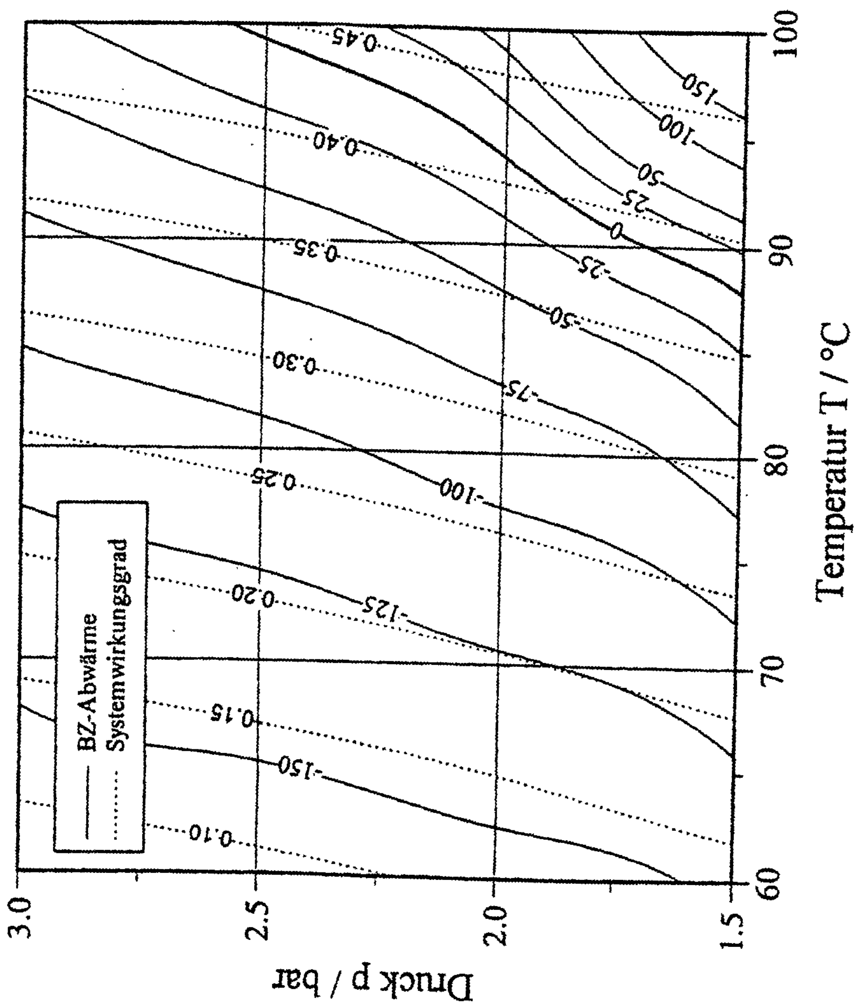
BZ-Abwärme
Systemwirkungsgrad
Druck p / bar
3.0
2.5
2.0
1.5
Temperatur T / °C
60
70
80
90
100
0.10
0.15
0.20
0.25
0.30
0.35
0.40
0.45
-150
-125
-100
-75
-50
-25
0
25
50
100
150

Figur 12

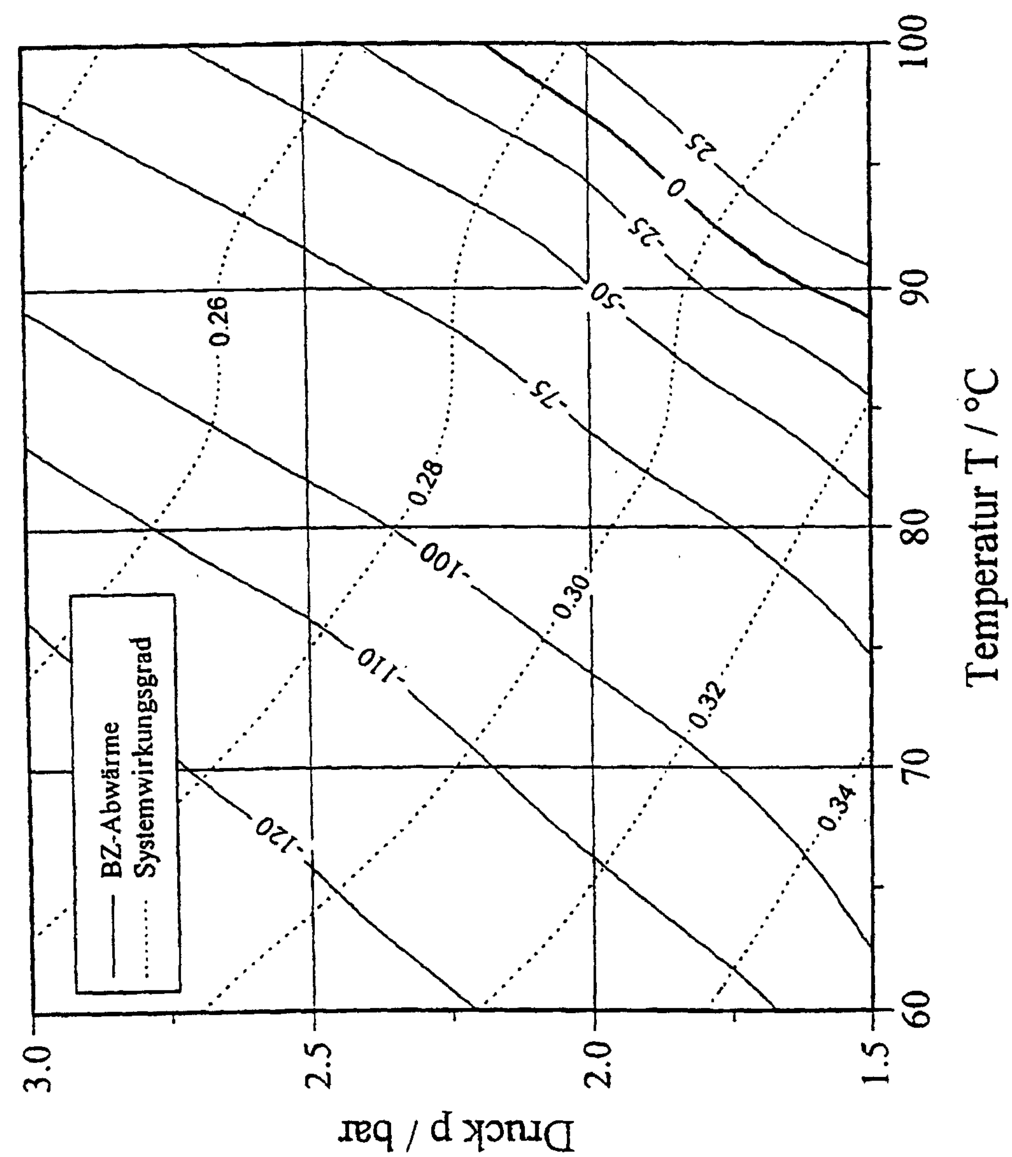
BZ-Abwärme
Systemwirkungsgrad
Druck p / bar
Temperatur T / °C
3.0
2.5
2.0
1.5
60
70
80
90
100
-120
-110
-100
-75
-50
-25
0
25
0.26
0.28
0.30
0.32
0.34

Figur 13

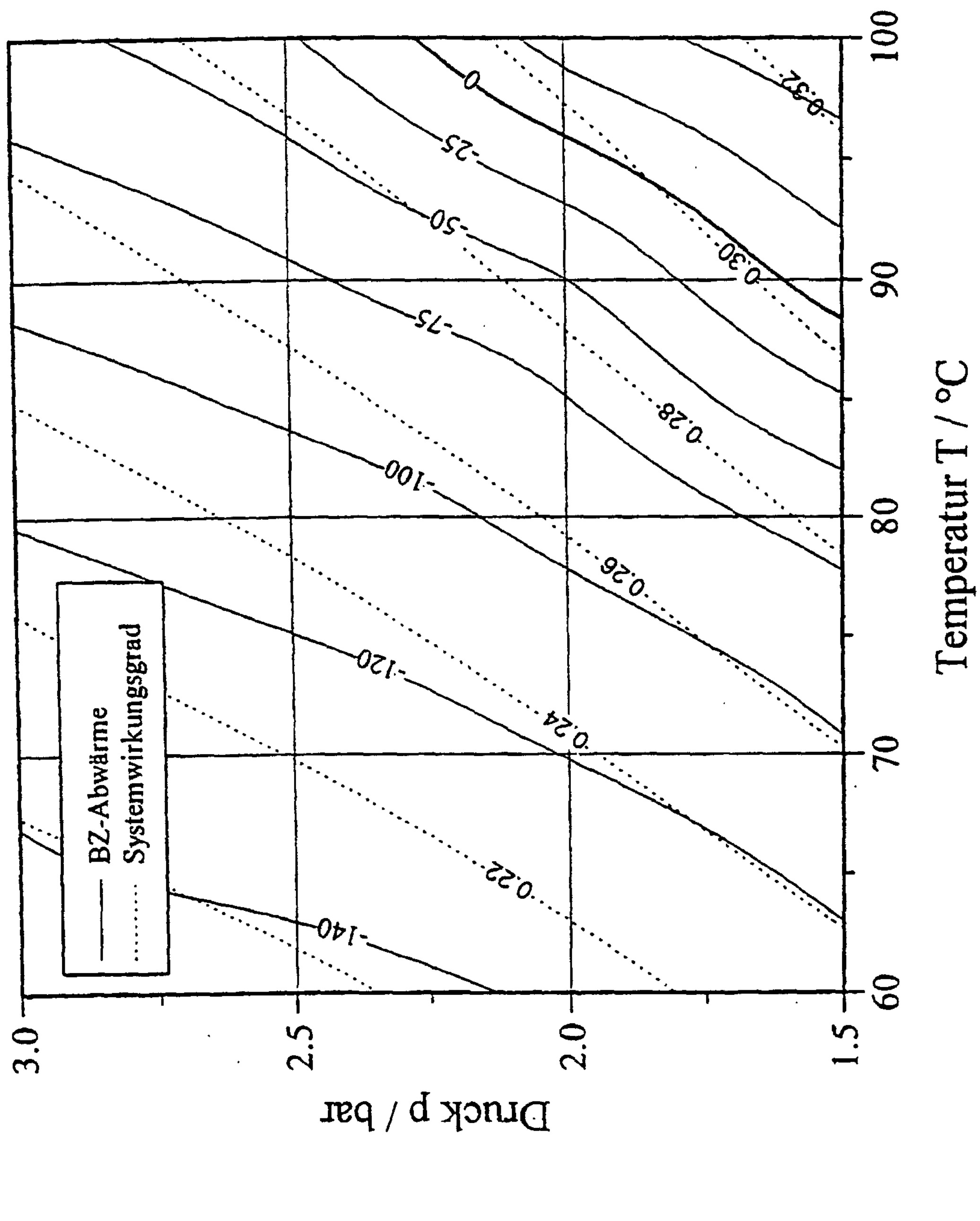
BZ-Abwärme
Systemwirkungsgrad
Druck p / bar
3.0
2.5
2.0
1.5
Temperatur T / °C
60
70
80
90
100
-140
-120
-100
-75
-50
-25
0
0.22
0.24
0.26
0.28
0.30
0.32

Figur 14